# EUROPÄISCHE PATENTSCHRIFT

(11) **EP 2 760 562 B1**
(45) Veröffentlichungstag und Bekanntmachung des Hinweises auf die Patenterteilung: **24.06.2015**
(21) Anmeldenummer: 12758502.4
(22) Anmeldetag: 14.09.2012
(51) Int. Cl.: B01D 46/24, B01D 46/52, B01D 46/00

(54) **FILTERELEMENT**
FILTER ELEMENT
ÉLÉMENT FILTRANT

(30) Priorität: 28.09.2011 DE 102011083657
(43) Veröffentlichungstag der Anmeldung: 06.08.2014
(73) Patentinhaber: Mahle International GmbH, 70376 Stuttgart (DE)
(72) Erfinder: BIBA, Stefan, 74354 Besigheim (DE); BRAUN, Ralf, 73312 Geislingen (DE); KAISER, Sven Alexander, 71364 Winnenden (DE)
(74) Vertreter: BRP Renaud & Partner mbB Rechtsanwälte Patentanwälte Steuerberater
(86) Internationale Anmeldenummer: PCT/EP2012/068022
(87) Internationale Veröffentlichungsnummer: WO 2013/045285

(56) Entgegenhaltungen:
- EP-A1- 0 646 401
- EP-A1- 1 621 240
- EP-A2- 1 070 478
- WO-A1-95/15204
- WO-A1-99/20450
- WO-A2-2006/084094
- DE-A1-102004 005 904
- US-A- 4 882 055
- US-A- 5 222 488
- US-A1- 2004 035 096

## Beschreibung

Die vorliegende Erfindung betrifft ein Filterelement, insbesondere für eine Gasfiltereinrichtung, vorzugsweise eine Luftfiltereinrichtung einer Frischluftanlage eines Fahrzeugs, mit den Merkmalen des Oberbegriffs des Anspruchs 1.

Aus der EP 2 292 311 A1 ist ein Filterelement bekannt, das mehrere Filterkörper aus Filtermaterial aufweist und eine Tragstruktur zum Positionieren der Filterkörper besitzt. Ferner zeigt das Filterelement einen Innenraum, der in der Umfangsrichtung von der Tragstruktur und den Filterkörpern umschlossen ist und der axial begrenzt ist. Beim bekannten Filterelement bestehen die einzelnen Filterkörper aus Filterplatten, die unabhängig vom übrigen Filterelement hergestellt werden. Des Weiteren ist beim bekannten Filterelement die Tragstruktur aus einer geeigneten Kombination aus Materialien und Rahmenteilen zusammengebaut. Die Herstellung des bekannten Filterelements ist dadurch vergleichsweise aufwändig.

Aus der DE 10 2004 005 904 A1 ist ein Filterelement bekannt, das zumindest drei Filterkörper umfasst, die aus einem gemeinsamen, durchgehenden und gefalteten Filtermaterial bestehen und die in der Umfangsrichtung einen Innenraum umschließen. An den axialen Stirnseiten der Filterkörper sind Abschlussplatten angebracht. Zusätzlich kann an einer axialen Stirnseite an den Abschlussplatten eine Verschlussplatte zum axialen Verschließen des Innenraums angeordnet sein. Auch dieses Filterelement wird somit aus einer Vielzahl von Einzelteilen zusammengebaut, wodurch die Herstellung entsprechend aufwändig ist.

Ein ähnliches Filterelement ist aus der WO 2006/084094 A2 bekannt.

Aus der DE 10 2007 024 287 A1 ist ein Filterelement bekannt, bei dem ein im Querschnitt U-förmiger Filterkörper zwischen zwei Endplatten angeordnet ist, wobei eine offene Seite des Filterkörpers mit einer Stirnplatte verschlossen ist, die mit den beiden Endplatten aus einem Stück hergestellt sein kann. Dabei werden die Endplatten und die Stirnplatte separat vom Filterkörper hergestellt und in üblicher Weise an den Filterkörper angebaut und damit durch Plastifizierung oder Verklebung oder Verschweißung verbunden.

Ein gattungsgemäßes Filterelement ist aus der EP 0 646 401 A1 bekannt. Es umfasst zwei Filterkörper aus Filtermaterial und eine Tragstruktur zum Positionieren der Filterkörper, wobei ein Innenraum des Filterelements in der Umfangsrichtung von der Tragstruktur und den Filterkörpern umschlossen ist und der axial von der Tragstruktur begrenzt ist. Die Tragstruktur ist an die Filterkörper angespritzt und bildet einen einteiligen Monolithen aus Kunststoff.

Die vorliegende Erfindung beschäftigt sich mit dem Problem, für ein Filterelement der eingangs genannten Art einen Weg aufzuzeigen, der insbesondere eine vergleichsweise preiswerte Herstellung ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, die Tragstruktur an den wenigstens einen Filterkörper in Form eines einteiligen Monolithen aus Kunststoff anzuspritzen. Mit anderen Worten, die Tragstruktur ist durch einen Spritzformkörper gebildet, der ein, einziges, zusammenhängendes Bauteil repräsentiert, wobei die Herstellung der Tragstruktur unmittelbar an dem wenigstens einen Filterkörper erfolgt. Hierdurch vereinfacht sich die Herstellung des Filterelements, da lediglich der jeweilige Filterkörper in einer Spritzform positioniert werden muss und anschließend vom Kunststoff der Tragstruktur umspritzt wird. Dabei wird der jeweilige Filterkörper vom Kunststoff der Tragstruktur so umspritzt, dass anschließend die Tragstruktur den jeweiligen Filterkörper quer zu seiner Durchströmungsrichtung ringförmig geschlossen eingefasst ist. Bei einem vorzugsweise rechteckig und plattenförmig konfigurierten Filterkörper bedeutet dies, dass sich der Kunststoff der Tragstruktur entlang eines Außenrands der vier Seiten des Filterkörpers erstreckt und geschlossen umläuft. Gleichzeitig wird beim Spritzformen der Tragstruktur der in der Umfangsrichtung eingefasste und axial einseitig begrenzte Innenraum geschaffen.

Das zur Realisierung des jeweiligen Filterkörpers verwendete Filtermaterial kann dabei einlagig oder mehrlagig konzipiert sein. Sofern eine mehrlagige Ausführung des Filtermaterials verwendet wird, können die einzelnen Filtermateriallagen unterschiedliche Eigenschaften aufweisen, bspw. um unterschiedliche Filtrationswirkungen zu realisieren. Unterschiedliche Materialeigenschaften schließen dabei auch die Verwendung unterschiedlicher Filtrationsmaterialien ein.

Bevorzugt ist eine Ausführungsform, bei welcher der Filterkörper aus gefaltetem Filtermaterial besteht, da ein gefaltetes Filtermaterial eine vergleichsweise große Oberfläche bereitstellt und dementsprechend einen vergleichsweise niedrigen Durchströmungswiderstand ermöglicht.

Gemäß einer vorteilhaften Ausführungsform kann der jeweilige Filterkörper plattenförmig ausgestaltet sein. Beispielsweise kann es sich um einen plissierten Plattenfilterkörper handeln. Vorzugsweise kann der plattenförmige Filterkörper eben konfiguriert sein, so dass er sich in einer Plattenebene, insbesondere spiegelsymmetrisch zu einer Symmetrieebene, erstreckt.

Vorzugsweise kann vorgesehen sein, dass der jeweilige Filterkörper in einer Ebene, in der sich die Umfangsrichtung erstreckt bzw. die sich senkrecht zur Axialrichtung des Filterelements erstreckt, einen viereckigen Querschnitt besitzt. Vorteilhaft erstrecken sich dann vier Seiten des Querschnitts geradlinig, wodurch rechteckige oder quadratische oder trapezförmige oder parallelogrammförmige Querschnitte sowie andere regelmäßige und unregelmäßige Viereck-Querschnitte realisierbar sind. Alternativ kann auch wenigstens eine der Seiten, vorzugsweise können zumindest zwei einander gegenüberliegende Seiten, gekrümmt sein, wodurch der jeweilige Filterkörper ein Zylindersegment bildet.

Gemäß einer anderen Ausführungsform kann eine sich in der Umfangsrichtung erstreckende radiale Begrenzung des Innenraums, vorzugsweise ausschließlich, durch zumindest einen Abschnitt der Tragstruktur und durch den jeweiligen Filterkörper gebildet sein. In der Folge wechseln sich innerhalb dieser radialen Begrenzung des Innenraums der wenigstens eine Filterkörper und die Tagstruktur in der Umfangsrichtung ab.

Erfindungsgemäß weist die Tragstruktur zwei axiale Enden auf, von denen zumindest das eine Ende als offenes Ende ausgestaltet ist. Das andere Ende kann ebenfalls offen oder aber geschlossen ausgeführt sein. Bei einer Ausführung als geschlossenes Ende wird der Innenraum des Filterelements durch dieses geschlossene Ende der Tragstruktur axial verschlossen. Das zumindest eine offene Ende umschließt eine Verbindungsöffnung des Filterelements in der Umfangsrichtung, wobei diese Verbindungsöffnung axial mit dem Innenraum fluidisch verbunden ist. Bei zwei offenen Enden kann das gegenüberliegende Ende durch eine Gehäusestruktur oder andere Bauteile abgedichtet werden oder analog zum ersten offenen Ende mit einer anderen Verbindungsöffnung verbunden sein. Je nach Durchströmungsrichtung des Filterkörpers dient die Verbindungsöffnung dabei als Einlassöffnung oder als Auslassöffnung. Erfindungsgemäß ist der jeweilige Filterkörper aus einem gefalteten Filtermaterial aufgebaut, so dass der jeweilige Filterkörper in der Umfangsrichtung des Filterelements nebeneinander mehrere im Querschnitt V-förmige Taschen aufweist, wobei sich nach außen offene Taschen und nach innen offene Taschen in Umfangsrichtung des Filterelements abwechseln. Das offene Ende der Tragstruktur kann nun komplementär zur Kontur des gefalteten Filtermaterials für den jeweiligen Filterkörper eine Reihe nebeneinander angeordneter, in die Verbindungsöffnung vorstehender Zähne aufweisen, die jeweils eine nach außen offene Tasche an einem dem offenen Ende der Tragstruktur zugewandten Längsende verschließen. Hierdurch wird eine seitliche Umströmung des jeweiligen Filterkörpers unterbunden. Gleichzeitig definieren die Zähne in der Umfangsrichtung des Filterelements zwischen benachbarten Zähnen jeweils eine Zahnlücke, um jeweils eine nach innen offene Tasche des jeweiligen Filterkörpers axial offen zu lassen. Hierdurch kann ein axiales Austreten einer Gasströmung aus den nach innen offenen Taschen sowie ein axiales Eintreten einer Gasströmung in die nach innen offenen Taschen weitgehend ohne Umlenkung und somit bei reduziertem Strömungswiderstand erfolgen. Zweckmäßig sind die Zähne komplementär zu den Querschnitten der Taschen geformt, besitzen also ein V-förmiges Profil mit nach innen weisenden Spitzen. Vorzugsweise sind die Zahnlücken komplementär zu den Taschen geformt, besitzen also zweckmäßig ein V-förmiges Profil mit nach außen weisenden Spitzen. Selbst wenn eine axiale Durchströmung im Bereich der Zahnlücken nicht erforderlich ist oder nicht möglich sein sollte, führt die Verwendung derartiger Zähne und somit die Ausgestaltung derartiger Zahnlücken dazu, dass nur vergleichsweise wenig Kunststoff benötigt wird, um die jeweilige axiale Stirnseite des jeweiligen Filterkörpers gasdicht zu verschließen.

Gemäß einer anderen Ausführungsform, bei der die Tragstruktur ebenfalls zwei axiale Enden aufweist, von denen zumindest das eine Ende als offenes Ende ausgestaltet ist. Das andere Ende kann ebenfalls wie vorstehend bereits ausgeführt offen oder aber geschlossen ausgeführt sein. Das offene Ende kann eine Verbindungsöffnung in der Umfangsrichtung umschließen, die axial mit dem Innenraum fluidisch verbunden ist, kann entsprechend einer vorteilhaften Weiterbildung vorgesehen sein, dass am offenen Ende außen eine separat zur Tragstruktur hergestellte Endplatte angebracht ist, die eine axial zur Verbindungsöffnung fluchtende Durchgangsöffnung aufweist. Eine derartige Endplatte, die insbesondere aus Kunststoff hergestellt ist, kann mit der Tragstruktur verschweißt, verklebt oder plastifiziert sein. Die Endplatte kann einen Stutzen aufweisen, der axial von der Endplatte absteht und die Durchgangsöffnung in der Umfangsrichtung einschließt. Über diesen Stutzen lässt sich das Filterelement besonders einfach an einen Gaspfad anschließen. Bspw. kann in einem Filtergehäuse einer Filtereinrichtung eine komplementär zum Stutzen geformte Stutzenaufnahme ausgebildet sein, in welche der Stutzen einsetzbar ist. Bei zwei offenen Enden kann das andere offene Ende analog zum ersten offenen Ende ausgeführt sein und durch eine Gehäusestruktur oder andere Bauteile abgedichtet werden oder mit einer Verbindungsöffnung verbunden sein.

Entsprechend einer vorteilhaften Weiterbildung können die am offenen Ende ausgebildeten Zähne in den offenen Querschnitt der Durchgangsöffnung der Endplatte hineinragen. Das bedeutet, dass die Zähne quer zur Axialrichtung in die Durchgangsöffnung hineinragen. In diesem Fall ermöglichen die zuvor genannten Zahnlücken ein vereinfachtes Einströmen bzw. Ausströmen und Vergrößern innerhalb der Durchgangsöffnung den zur Verfügung stehenden, durchströmbaren Querschnitt. Alternativ ist auch eine Ausführungsform denkbar, bei welcher die Zähne mit ihren innen liegenden Enden außerhalb des offenen Querschnitts der Durchgangsöffnung verbleiben. Das bedeutet, dass in der Axialrichtung der durchströmbare Querschnitt der Durchgangsöffnung nicht durch die Zähne beeinträchtigt ist.

Bei einer anderen Ausführungsform, die ebenfalls von einer Tragstruktur ausgeht, die zwei axiale Enden aufweist, von denen zumindest das eine Ende als offenes Ende ausgestaltet ist. Das andere Ende kann ebenfalls wie vorstehend bereits ausgeführt offen oder aber geschlossen ausgeführt sein. Das offene Ende kann eine axial mit dem Innenraum fluidisch verbundene Verbindungsöffnung in der Umfangsrichtung umschließen. Weiterhin kann am offenen Ende außen eine in Umfangsrichtung geschlossen umlaufende Dichtung angespritzt sein, welche die Verbindungsöffnung umschließt. Zum Anspritzen der Dichtung kann bspw. eine Zwei-Komponenten-Technik bzw. eine Zwei-K-Technik verwendet werden. Insbesondere kann dabei das Anspritzen der Dichtung aus Kunststoff innerhalb derselben Spritzform erfolgen, in der bereits das Anspritzen der Tragstruktur an den jeweiligen Filterkörper durchgeführt worden ist. Eine derartige Dichtung ermöglicht ein fluidisch dichtes Einsetzen des Filterelements in ein Filtergehäuse. In diesem Fall kann auf eine Endplatte mit Stutzen verzichtet werden. Zweckmäßig kann die Dichtung entlang eines Außenrands des offenen Endes verlaufen. Somit verläuft die Dichtung insbesondere außen entlang der nach innen vorstehenden Zähne und insbesondere nach außen beabstandet zu den nach außen weisenden Spitzen der Zahnlücken. Bei zwei offenen Enden kann das andere offene Ende analog zum ersten offenen Ende ausgeführt sein und durch eine Gehäusestruktur oder andere Bauteile abgedichtet werden oder mit einer Verbindungsöffnung verbunden sein.

Zweckmäßig kann die Dichtung als Axialdichtung ausgestaltet sein. Das bedeutet, dass die Dichtung axial mit einer Gegendichtfläche kontaktiert wird, insbesondere unter axialer Vorspannung. Alternativ kann die Dichtung auch als Radialdichtung ausgestaltet sein. Das bedeutet, dass die Dichtung radial mit einer zugehörigen Gegendichtfläche kontaktiert wird, vorzugsweise unter Vorspannung. Alternativ ist auch eine Ausführungsform denkbar, bei welcher die Dichtung axial und radial wirkt. In diesem Fall kommt die Dichtung im Einbauzustand sowohl axial als auch radial an einer Gegendichtfläche zur Anlage, vorzugsweise unter Vorspannung. Die jeweilige Gegendichtfläche befindet sich dann in einem Filtergehäuse einer entsprechenden Filtereinrichtung.

Bei einer anderen vorteilhaften Ausführungsform können zumindest zwei Filterkörper vorgesehen sein, die in der Umfangsrichtung benachbart und zueinander berührungslos angeordnet sind. Das bedeutet, dass in der Umfangsrichtung des Filterelements zwischen benachbarten Filterkörpern ein Abschnitt der Tragstruktur angeordnet ist. Hierdurch übernimmt die Tragstruktur gleichzeitig eine Gehäusefunktion. Bei einer derartigen Ausführungsform lassen sich somit zwei separate Filterkörper verwenden.

Die wenigstens zwei Filterkörper können dabei grundsätzlich identisch, also als Gleichteile konzipiert sein. Es ist jedoch auch eine Ausführungsform denkbar, bei der zwei geometrisch verschiedene Filterkörper vorgesehen sind. Bspw. können sich die Filterkörper hinsichtlich ihrer axialen Länge voneinander unterscheiden. Ferner können die Filterkörper am geschlossenen Ende der Tragstruktur unterschiedliche Orientierungen besitzen. Bspw. kann sich das jeweilige Längsende des einen Filterkörpers in einer Normalebene erstrecken, die senkrecht zur Axialrichtung liegt, während das Längsende eines anderen Filterkörpers in einer zur Normalebene und zur Axialrichtung geneigten Ebene liegt.

Bei einer Ausführungsform, bei der genau zwei Filterkörper vorgesehen sind, kann das Filterelement einen rechteckigen Querschnitt aufweisen, wobei die beiden Filterkörper einander gegenüberliegen und dabei zwei lange Seiten des rechteckigen Querschnitts oder zwei kurze Seiten des rechteckigen Querschnitts bilden. Die einander gegenüberliegenden anderen Seiten des rechteckigen Querschnitts werden dann jeweils von Abschnitten der Tragstruktur gebildet, die wiederum eine ausgeprägte Gehäusefunktion besitzt.

Bei einer anderen Ausführungsform ist nur ein einziger Filterkörper vorgesehen, wobei sich dann in diesem Fall die Tragstruktur in der Umfangsrichtung über wenigstens 180° um den Innenraum herum erstreckt und dementsprechend eine wesentliche Gehäusefunktion besitzt. Bemerkenswert ist auch hier, dass für den Filterkörper zweckmäßig eine plattenförmige, rechteckförmige und insbesondere ebene Struktur verwendet wird, um eine möglichst gleichförmige Durchströmung des Filterkörpers zu gewährleisten.

Ein erfindungsgemäßes Verfahren zum Herstellen eines Filterelements der vorstehend beschriebenen Art umfasst zum einen den Schritt des Positionierens wenigstens eines Filterkörpers aus, insbesondere gefaltetem, Filtermaterial in einer Spritzgussform, sowie den Schritt des Anspritzens einer monolithischen Tragstruktur an den wenigstens einen Filterkörper, derart, dass ein Filterelement mit einem Innenraum entsteht, der in der Umfangsrichtung von der Tragstruktur und dem wenigstens einen Filterkörper umschlossen ist.

Nach dem Anspritzen der Tragstruktur kann das Filterelement bereits fertig sein. Grundsätzlich ist jedoch denkbar, dass, insbesondere in derselben Spritzform, noch eine Dichtung an ein offenes Ende der Tragstruktur angespritzt wird. Ferner ist denkbar, dass nach dem Anspritzen der Tragstruktur eine Endplatte mit Durchgangsöffnung an das offene Ende der Tragstruktur angebaut wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondem auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine isometrische Ansicht eines Filterelements,
- Fig. 2: eine auseinandergezogene isometrische Ansicht des Filterelements aus Fig. 1,
- Fig. 3a-3f: isometrische Ansichten des Filterelements aus Fig. 1 bei unterschiedlichen Herstellungsstufen,
- Fig. 4: eine isometrische Ansicht des Filterelements bei einer anderen Ausführungsform,
- Fig. 5: eine vergrößerte Detailansicht des Filterelements aus Fig. 4
- Fig. 6: eine vergrößerte Detailansicht wie in Fig. 5, jedoch bei einer anderen Ausführungsform,
- Fig. 7: eine isometrische Ansicht (a) und eine Axialansicht (b) eines Filterelements einer anderen Ausführungsform,
- Fig. 8: eine isometrische Ansicht (a) und eine teilweise geschnittene Axialansicht (b) des Filterelements bei einer weiteren Ausführungsform,
- Fig. 9-12: jeweils eine isometrische Ansicht des Filterelements mit Endplatte (a) und bei weggelassener Endplatte (b), bei verschiedenen Ausführungsformen,
- Fig. 13: eine teilweise geschnittene Axialansicht eines asymmetrischen Filterelements,
- Fig. 14-16: isometrische Ansichten eines Filterelements bei weiteren Ausführungsformen,
- Fig. 17: isometrische Ansichten eines Filterelements in verschiedenen Blickrichtungen (a) bei einer weiteren Ausführungsform,
- Fig. 18,19: isometrische Ansichten des Filterelements bei weiteren Ausführungsformen.

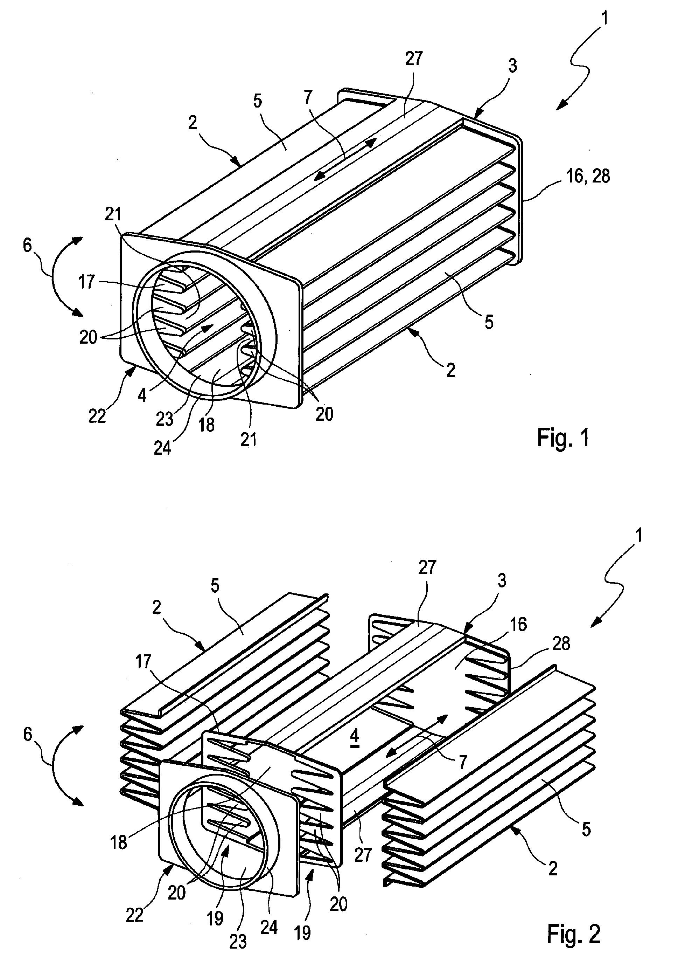

Entsprechend den Figuren 1 bis 19 umfasst ein Filterelement 1, bei dem es sich bevorzugt um ein Gasfilterelement, insbesondere um ein Luftfilterelement, handelt, zumindest einen Filterkörper 2, eine Tragstruktur 3 und einen Innenraum 4. Dementsprechend handelt es sich beim Filterelement 1 um ein Hohlkammerfilterelement. Der Filterkörper 2 besteht aus einem Filtermaterial 5, das einlagig oder mehrlagig und bei den hier gezeigten Ausführungsformen vorzugsweise gefaltet ist. Die Tragstruktur 3 dient zum Positionieren des jeweiligen Filterkörpers 2, fixiert also die Raumlage des jeweiligen Filterkörpers 2. Der Innenraum 4 ist in einer durch einen Doppelpfeil angedeuteten Umfangsrichtung 6 von der Tragstruktur 3 und dem jeweiligen Filterelement 2 umschlossen. Ferner ist der Innenraum 4 in einer durch einen Doppelpfeil angedeuteten Axialrichtung 7 an einem Ende, das zumindest in den Figuren 1 bis 16 an einer vom Betrachter abgewandten Seite angeordnet ist, von der Tragstruktur 3 begrenzt. Die Tragstruktur 3 ist ein Kunststoffspritzgussteil und ist an den jeweiligen Filterkörper 2 angespritzt, derart, dass die Tragstruktur 3 einen einteiligen Monolithen aus Kunststoff bildet.

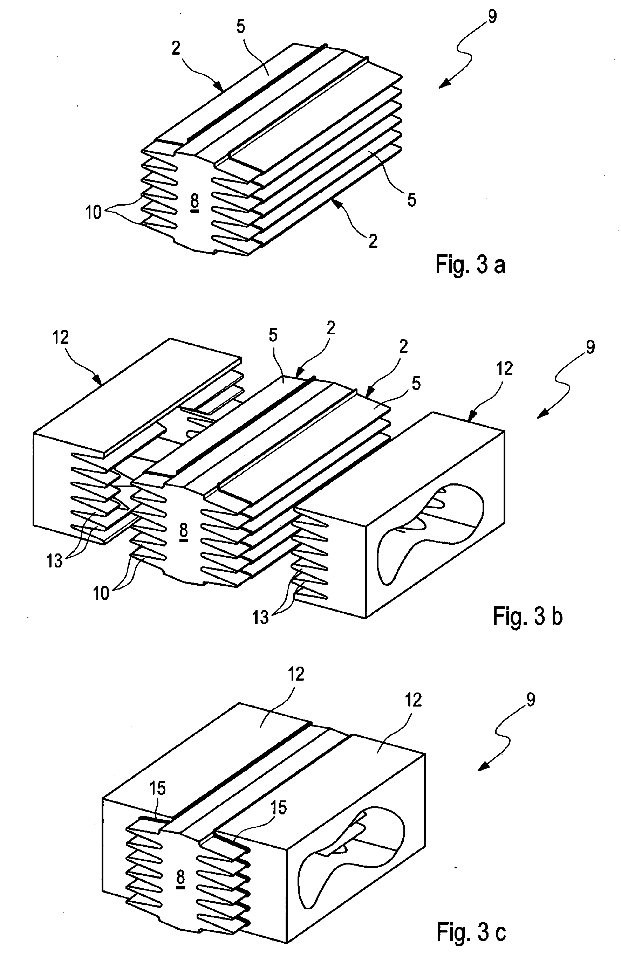

Ein bevorzugtes Verfahren zum Herstellen des Filterelements 1 wird nachfolgend mit Bezug auf die Figuren 3a bis 3f näher erläutert.

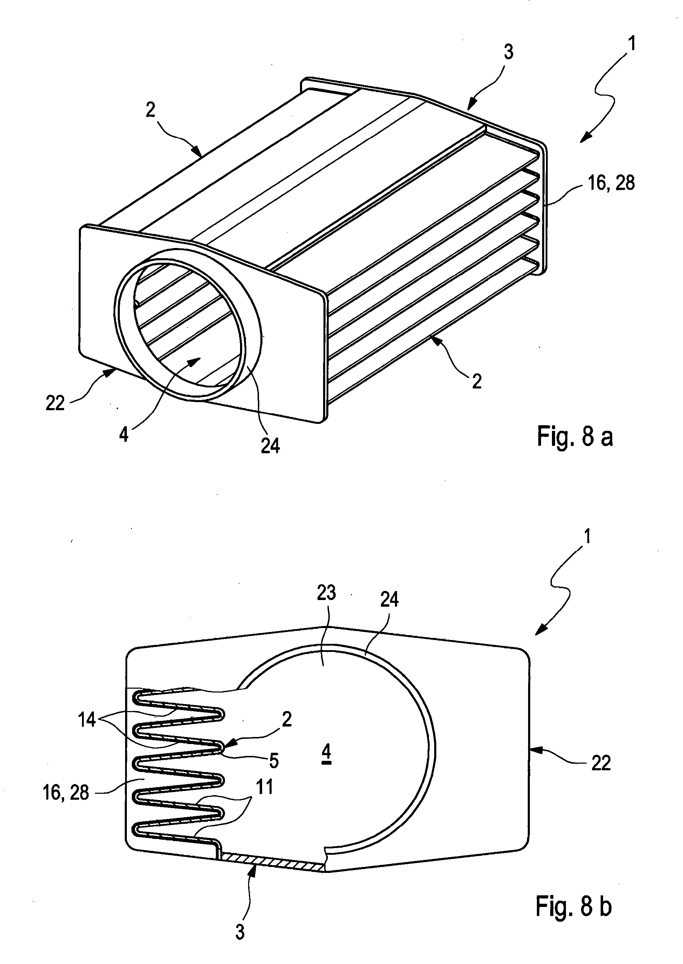

Zunächst wird gemäß Fig. 3a das bereits vorab und unabhängig von den übrigen Komponenten des Filterelements 1 hergestellte Filtermaterial 5 zum Ausbilden der Filterkörper 2 an einem Kern 8 eines Spritzformwerkzeugs 9 angeordnet. Sofern wie hier gefaltetes Filtermaterial 5 zum Herstellen der Filterkörper 2 verwendet wird, besitzt der Kern 8 zweckmäßig eine Vielzahl von Rippen 10, die komplementär zu nach innen offenen Taschen 11 (vgl. Figur 8b) des jeweiligen Filterkörpers 2 geformt sind, so dass der Kern 8 das Filtermaterial 5 zum Ausbilden der Filterkörper 2 stabil halten kann.

Entsprechend Fig. 3b werden nun Seitenteile 12 des Werkzeugs 9 angenähert, die ebenfalls eine Vielzahl von Rippen 13 aufweisen, die komplementär zu nach außen offenen Taschen 14 (Figur 8b) des jeweiligen Filterkörpers 2 geformt sind und die gemäß Fig. 3c in diese nach außen offenen Taschen 14 formschlüssig eingreifen, und das Filtermaterial 5 zum Ausbilden der jeweiligen Filterkörper 2 am Kern 8 fixieren. Erkennbar verbleibt beim Filtermaterial 5 des jeweiligen Filterkörpers 2 ein vollständig umlaufender Rand 15 außerhalb der geschlossenen Formen von Kern 8 und Seitenteilen 12, die abgesehen vom umlaufenden Rand 15 das Filtermaterial 5 des jeweiligen Filterkörpers 2 vollständig innen und außen abdecken.

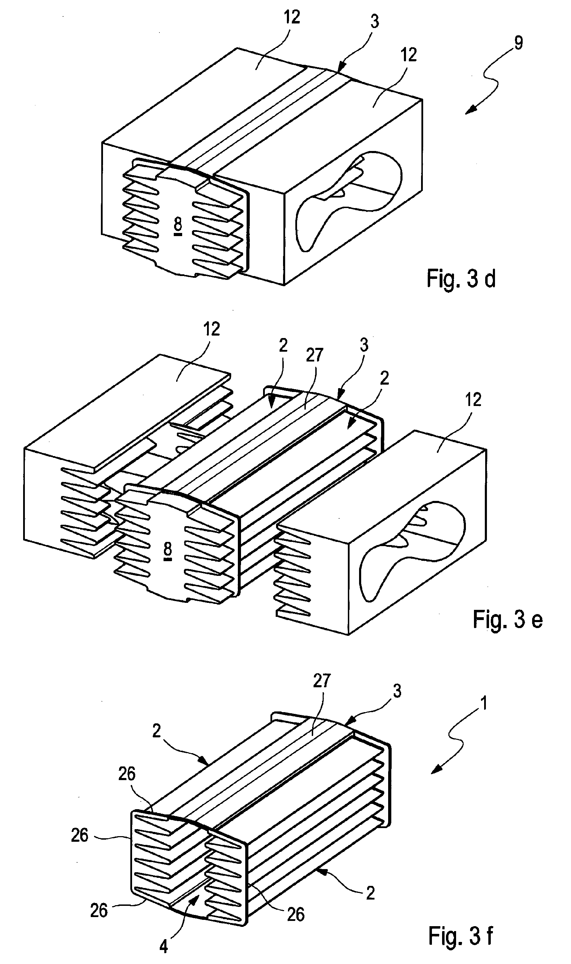

Anschließend erfolgt das Spritzformen der Tragstruktur 3 gemäß Fig. 3d. Zur Veranschaulichung ist dabei eine Außenform des Werkzeugs 9 weggelassen. Die Tragstruktur 3 wird so angespritzt, dass sie die freistehenden Ränder 15 des Filtermaterials 5 vollständig umschließen bzw. umspritzen und somit dicht verschließen. Erst durch das Anspritzen der Tragstruktur 3 wird das Filtermaterial 5 bzw. dessen Raumlage fixiert, um den jeweiligen Filterkörper 2 zu bilden.

Anschließend werden gemäß Fig. 3e die Seitenteile 12 entfernt. Danach kann gemäß Fig. 3f der Kern 8 entfernt werden.

Das Filterelement 1 bestehend aus der Tragstruktur 3 und den beiden integrierten Filterkörpern 2 ist nun fertiggestellt. Dabei ist es grundsätzlich möglich, dass weitere Komponenten daran angebracht werden können, wie z. B. eine Endplatte oder eine Dichtung, was weiter unten jedoch noch näher erläutert wird.

Entsprechend den Figuren 1 bis 19 besitzt die Tragstruktur 3 zwei axiale Enden, nämlich ein geschlossenes Ende 16 und ein offenes Ende 17. Die beiden Enden 16,17 liegen sich in der Axialrichtung 7 gegenüber. Das offene Ende 17 umschließt in der Umfangsrichtung 6 eine Verbindungsöffnung 18, die in der Axialrichtung 7 mit dem Innenraum 4 fluidisch verbunden ist.

Wie erläutert, ist bei den hier gezeigten Ausführungsformen das Filtermaterial 5 des jeweiligen Filterkörpers 2 gefaltet, derart, dass sich in der Umfangsrichtung 6 nach innen offene Taschen 11 (Figur 8b) und nach außen offene Taschen 14 (Figur 8b) abwechseln. Die Taschen 11, 14 besitzen dabei jeweils einen V-förmigen Querschnitt. Entsprechend einer hier vorgestellten vorteilhaften Ausführungsform weist das offene Ende 17 der Tragstruktur 3 für den jeweiligen Filterkörper 2 eine Reihe 19 von in der Umfangsrichtung 6 nebeneinander angeordneten Zähnen 20 auf. Diese Zähne 20 stehen dabei quer zur Längsrichtung 7 in die Verbindungsöffnung 18 vor. Ferner verschließt der jeweilige Zahn 20 eine nach außen offene Tasche 14 an einem dem offenen Ende 17 der Tragstruktur 3 zugewandten Längsende des Filtermaterials 5 bzw. des Filterkörpers 2. Die nach innen spitz zulaufenden Zähne 20 definieren in der Umfangsrichtung 6 zwischen sich jeweils eine Zahnlücke 21, die ebenfalls im Profil V-förmig sind und nach außen spitz zulaufen. Diese Zahnlücken 21 sind dabei den nach innen offenen Taschen 11 zugeordnet. Durch die Zähne 20 bzw. die Zahnlücken 21 sind die nach innen offenen Taschen 11 an dem dem offenen Ende 17 der Tragstruktur 3 zugewandten Ende des jeweiligen Filterkörpers 2 axial offen, sodass ihr Querschnitt zum Querschnitt der Verbindungsöffnung 18 gehört.

Bei den Ausführungsformen der Figuren 1, 2 und 7 bis 19 ist am offenen Ende 17 der Tragstruktur 3 an einer vom Innenraum 4 abgewandten Außenseite eine Endplatte 22 angebracht, die separat zur Tragstruktur 3 hergestellt ist und die eine Durchgangsöffnung 23 aufweist. Im montierten Zustand fluchtet die Durchgangsöffnung 23 zur Verbindungsöffnung 18, sodass durch die Durchgangsöffnung 23 hindurch eine fluidische Verbindung mit dem Innenraum 4 möglich ist. Im Unterschied zu der an die Tragstruktur 3 angebauten Endplatte 22 ist eine am geschlossenen Ende 16 vorgesehene Endwand 28, die gegenüber der Verbindungsöffnung 18 den Innenraum 4 axial verschließt, ein integraler Bestandteil der Tragstruktur 3.

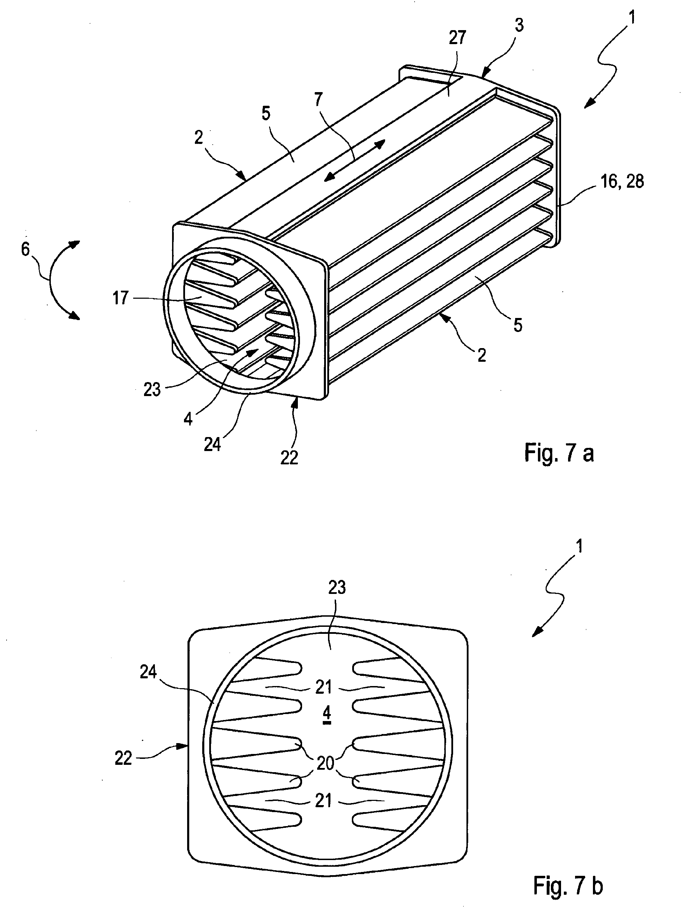

Die Abmessungen der Filterelements 1 können insgesamt so gewählt werden, dass gemäß der in den Figuren 7a und 7b gezeigten Ausführungsform die Zähne 20 in den offenen Querschnitt der Durchgangsöffnung 23 hineinragen. Alternativ dazu zeigen rein exemplarisch die Figuren 8a und 8b eine Ausführungsform, bei welcher die Abmessungen so gewählt sind, dass die Zähne 20 nicht in den offenen Querschnitt der Durchgangsöffnung 23 hineinragen. In diesem Fall verbleiben die nicht näher bezeichneten innen liegenden Enden der Zähne 20 außerhalb des offenen Querschnitts der Durchgangsöffnung 23. In diesem Fall definiert der Querschnitt der Durchgangsöffnung 23 den durchströmbaren Querschnitt für die fluidische Verbindung mit dem Innenraum 4. Im vorstehend beschriebenen Fall bzgl. Fig. 7 reduzieren die in den offenen Querschnitt der Durchgangsöffnung 23 hineinragenden Zähne 20 den durchströmbaren Querschnitt, durch den der Innenraum 4 erreichbar ist.

Die Endplatte 22 kann entsprechend den hier gezeigten, bevorzugten Ausführungsformen einen Stutzen 24 aufweisen, der die Durchgangsöffnung 23 in der Umfangsrichtung 6 umschließt und der an einer vom Innenraum 4 abgewandten Seite axial nach außen absteht. Der Stutzen 24 bildet insbesondere einen Anschlussstutzen und je nach Durchströmungsrichtung des Filterelements 1 einen Einlassstutzen 24 oder einen Auslassstutzen 24. Die Befestigung der Endplatte 22 an der offenen Seite 17 der Tragstruktur 3 erfolgt auf geeignete Weise, die eine hinreichende Abdichtung gewährleistet. Bspw. kann die Endplatte 22 an die Tragstruktur 3 angeschweißt oder angeklebt sein. Ebenfalls ist eine Plastifizierung der Endplatte 22 an die Tragstruktur 3 denkbar.

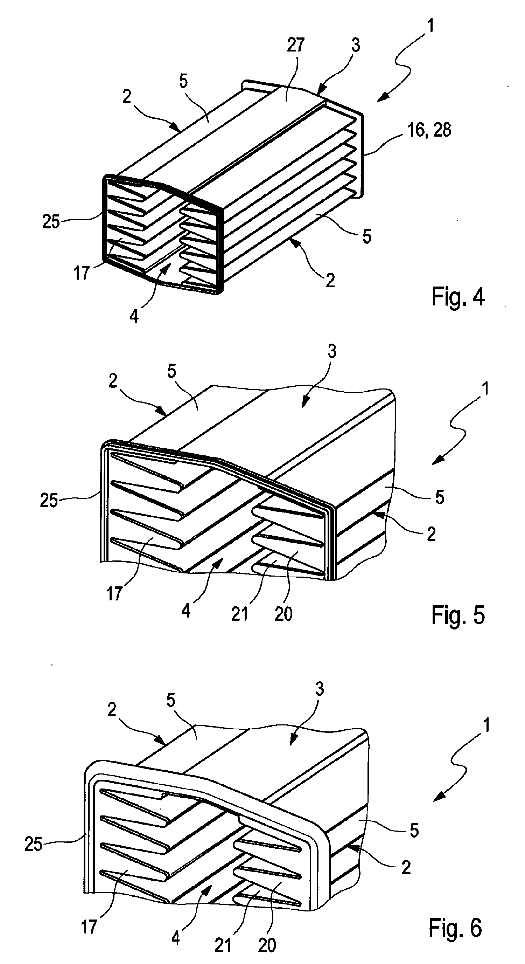

In den Figuren 4 bis 6 sind alternative Ausführungsformen gezeigt, bei denen keine Endplatte 22 vorgesehen ist. Stattdessen wird bei diesen Ausführungsformen am offenen Ende 17 der Tragstruktur 3 an einer vom Innenraum 4 abgewandten Außenseite eine in der Umfangsrichtung 6 geschlossen umlaufende Dichtung 25 angeordnet, deren Verlauf so gewählt ist, dass sie die Verbindungsöffnung 18 umschließt. Zweckmäßig ist die jeweilige Dichtung 25 an die Tragstruktur 3 angespritzt, vorzugsweise in Zwei-Komponenten-Technik. Bei den hier gezeigten Beispielen verläuft die Dichtung 25 entlang eines Außenrands 26 (Fig. 3f) des offenen Endes 17 der Tragstruktur 3. In den Beispielen der Figuren 4 und 5 ist die Dichtung 25 als Axialdichtung ausgestaltet, die im montierten Zustand axial an einer Gegendichtfläche, insbesondere unter Vorspannung, zur Anlage kommt. Die Axialdichtung 25 steht dabei axial von dem offenen Ende 17 der Tragstruktur 3 ab. Im Unterschied dazu zeigt Fig. 6 eine Ausführungsform, bei welcher die Dichtung 25 als Radialdichtung ausgestaltet ist, die im montierten Zustand radial, insbesondere unter Vorspannung, an einer entsprechenden Gegendichtfläche zur Anlage kommt. Die Radialdichtung 25 steht radial über den Rand 26 (Fig. 3f) des offenen Endes 17 der Tragstruktur 3 über. Grundsätzlich ist auch eine Ausführungsform denkbar, bei welcher die Dichtung 25 sowohl axial als auch radial dichtend wirkt. In diesem Fall steht die Dichtung 25 sowohl axial über das offene Ende 17 als auch radial über den Rand 26 über.

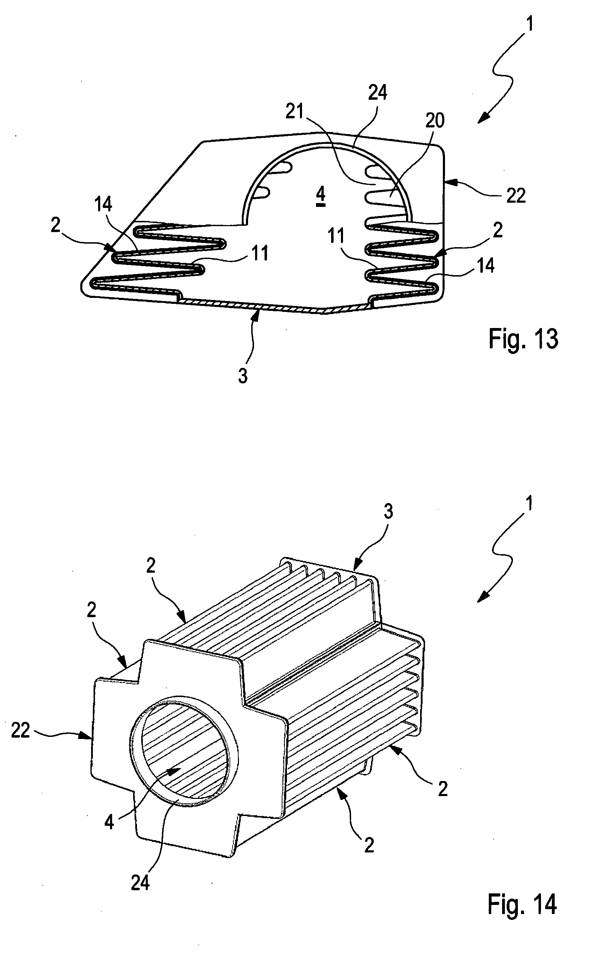

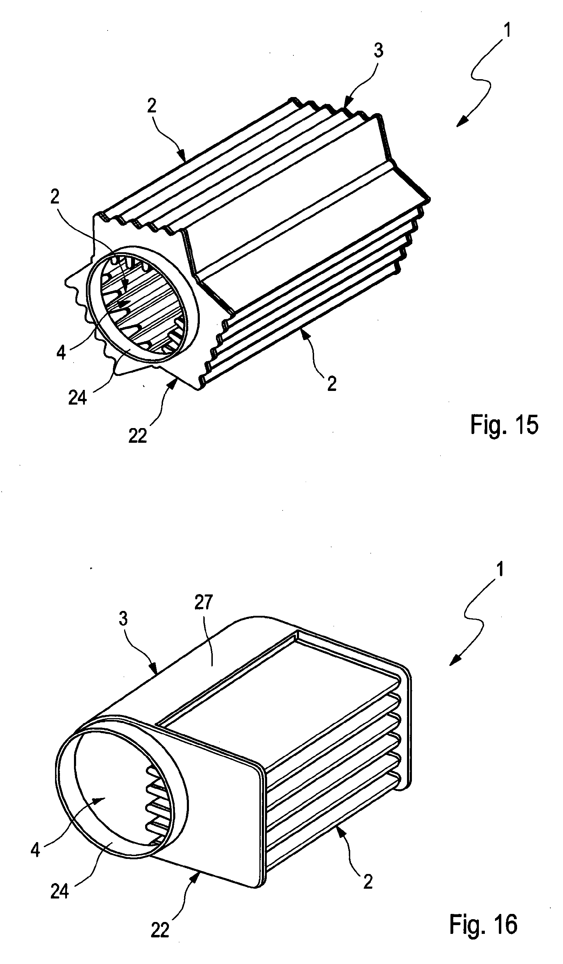

Bei den Ausführungsformen der Figuren 1 bis 13 und 17 bis 19 sind jeweils genau zwei Filterkörper 2 vorgesehen. Die in Fig. 14 gezeigte Ausführungsform umfasst genau vier Filterkörper 2. Die in Fig. 15 gezeigte Ausführungsform umfasst genau drei Filterkörper 2. Die in Fig. 16 gezeigte Ausführungsform umfasst nur einen einzigen Filterkörper 2.

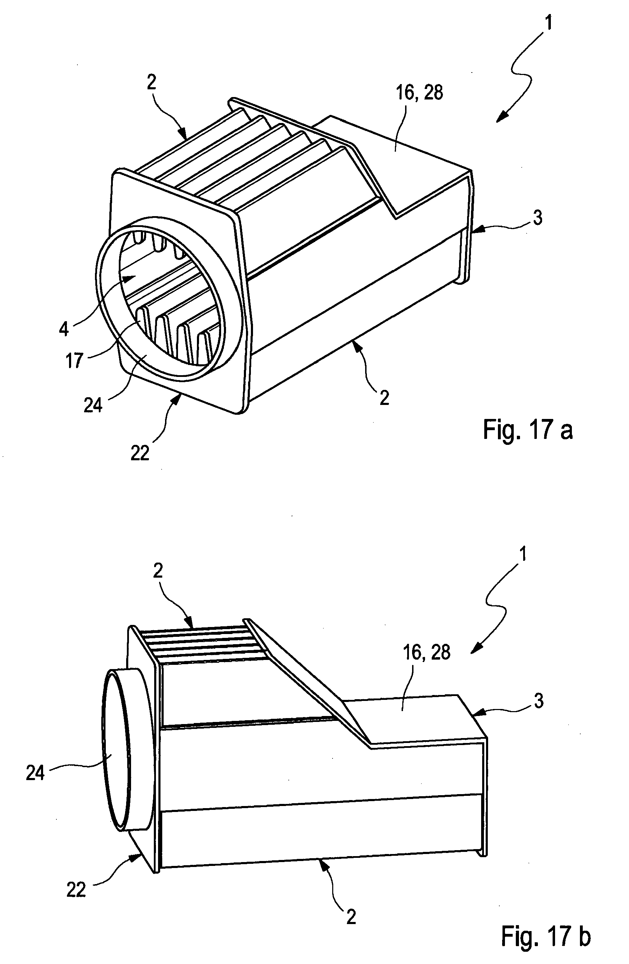

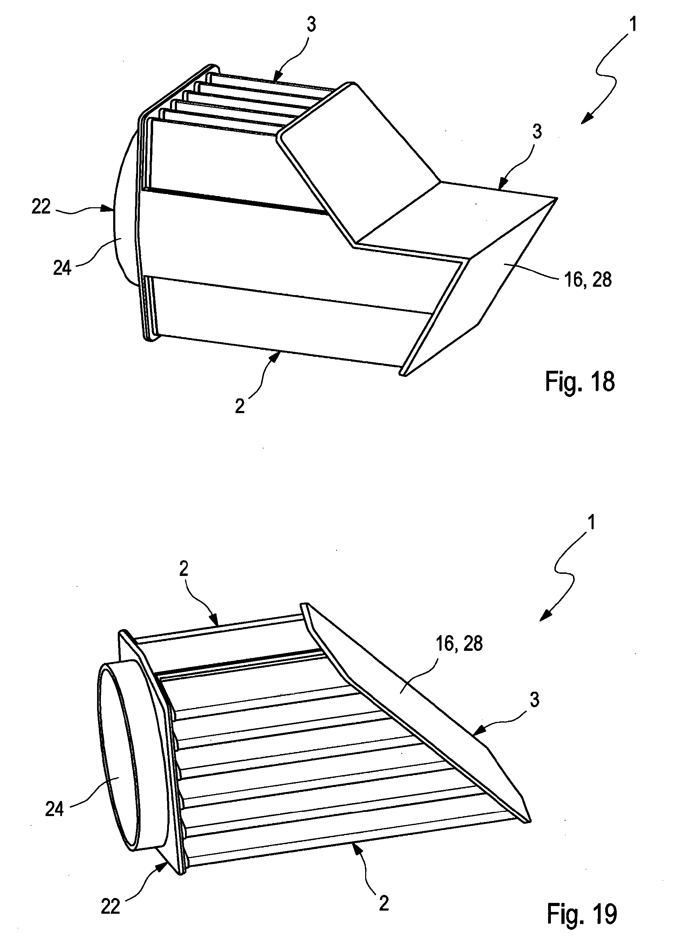

Sofern mindestens zwei Filterkörper 2 vorgesehen sind, sind diese bzw. deren Filtermaterial 5 in der Umfangsrichtung 6 benachbart und zueinander berührungslos angeordnet. In der Folge erstreckt sich in der Umfangsrichtung 6 zwischen benachbarten Filterkörpern 2 jeweils ein Abschnitt 27 der Tragstruktur 3, der somit die Funktion eines Gehäuses zur Begrenzung des Innenraums 4 radial bzw. quer zur Längsrichtung 7 übernimmt. Bei den meisten hier gezeigten Ausführungsformen von Filterelementen 1, bei denen wenigstens zwei Filterkörper 2 vorgesehen sind, sind die wenigstens zwei Filterkörper 2 identisch aufgebaut, nämlich vorzugsweise als Gleichteile. Hierdurch lässt sich das jeweilige Filterelement 1 besonders preiswert realisieren. Im Unterschied dazu zeigen die Figuren 13 und 17 bis 19 rein exemplarische Ausführungsformen, bei denen unterschiedliche Filterkörper 2 verwendet werden, die sich zumindest hinsichtlich ihrer Geometrie voneinander unterscheiden. Bei der in Fig. 13 gezeigten Ausführungsform ist der rechts gezeigte Filterkörper 2 im Querschnitt rechteckförmig konzipiert, während der in Fig. 13 links gezeigte Filterkörper 2 im Querschnitt trapezförmig konzipiert ist. Bei den Figuren 17 bis 19 ist der jeweilige obere Filterkörper 2 axial deutlich kürzer konzipiert als der jeweilige untere Filterkörper 2. Ferner ist bei diesen Ausführungsformen der untere Filterkörper 2 an seinem dem geschlossenen Ende 16 bzw. der geschlossenen Endwand 28 zugewandten Ende mit einer anderen Neigung gegenüber der Axialrichtung 7 versehen als der obere Filterkörper 2. Beispielsweise ist bei der in den Figuren 17a und b gezeigten Ausführungsform die dem geschlossenen Ende 16 zugewandte axiale Stirnseite des unteren Filterkörpers 2 in einer Normalebene angeordnet, die sich senkrecht zur Axialrichtung 7 erstreckt, während die dem geschlossenen Ende 16 der Tragstruktur 3 zugewandte Seite des oberen Filterkörpers 2 hier in einer Ebene liegt, die gegenüber der Längsrichtung 7 geneigt verläuft, also zwischen 0° und 90°. Bei der in Fig. 18 gezeigten Ausführungsform sind die dem geschlossenen Ende 16 zugewandten Längsenden der beiden Filterkörper 2 in unterschiedlich zur Längsrichtung und zur Querrichtung geneigten Ebenen angeordnet. Bei der in Fig. 19 gezeigten Ausführungsform liegen die dem geschlossenen Ende 16 zugewandten Längsenden der beiden Filterköper 2 in einer gemeinsamen Ebene, die gegenüber der Normalebene zur Axialrichtung 7 und gegenüber der Axialrichtung 7 geneigt ist.

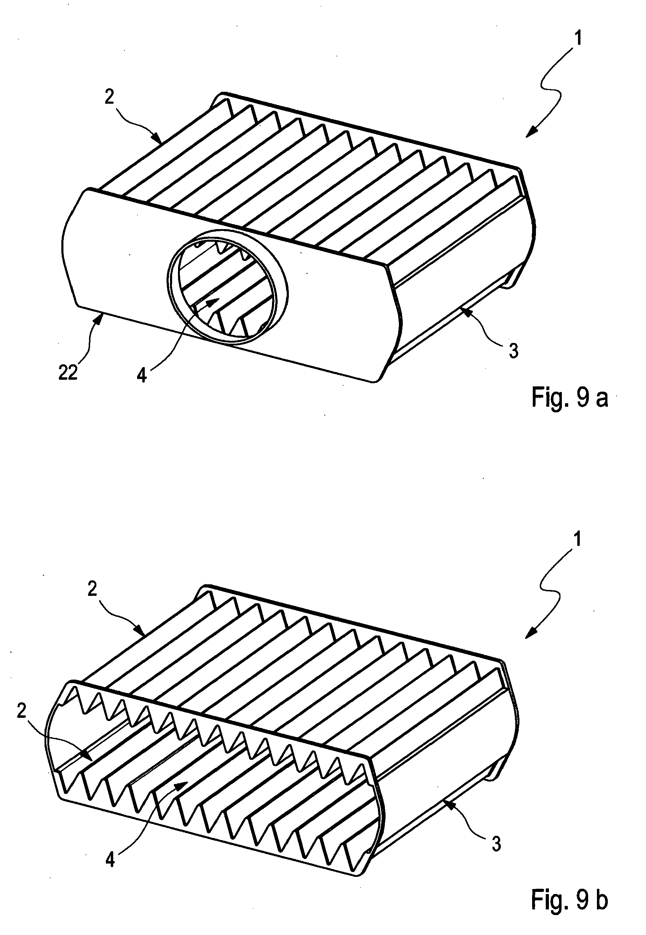

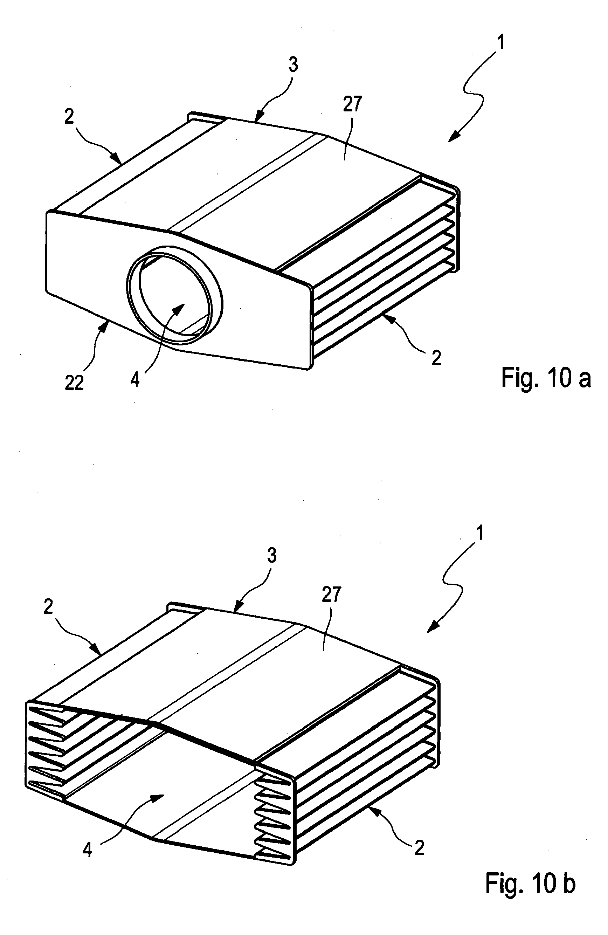

Bei den Ausführungsformen der Figuren 1 bis 10 besitzt das Filterelement 1 genau zwei Filterkörper 2 und einen im Wesentlichen rechteckigen Querschnitt. Ein derartiger rechteckiger Querschnitt besitzt üblicherweise zwei lange Seiten und zwei kurze Seiten, die sich jeweils diametral gegenüberliegen. Bei der in den Figuren 9a und 9b gezeigten Ausführungsform bilden die beiden Filterkörper 2 die beiden langen Seiten des Rechteckquerschnitts, während zwei Abschnitte 27 der Tragstruktur 3 die beiden kurzen Seiten des Rechteckquerschnitts bilden. Im Unterschied dazu zeigen die Figuren 10a und 10b eine Ausführungsform, bei welcher die beiden Filterkörper 2 die beiden kurzen Seiten des Rechteckquerschnitts bilden, während die beiden Abschnitte 27 der Tragstruktur 3 die beiden langen Seiten des Rechteckquerschnitts bilden.

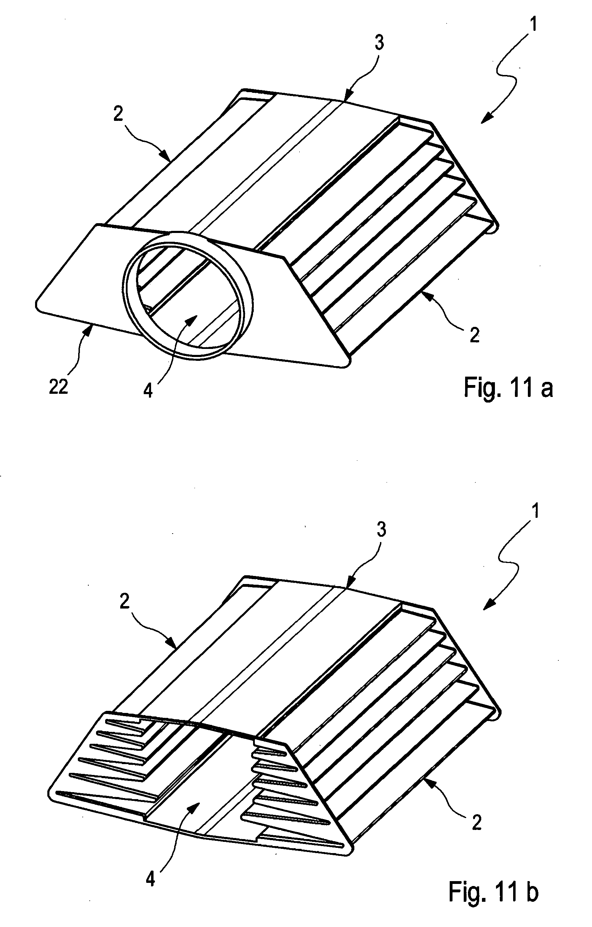

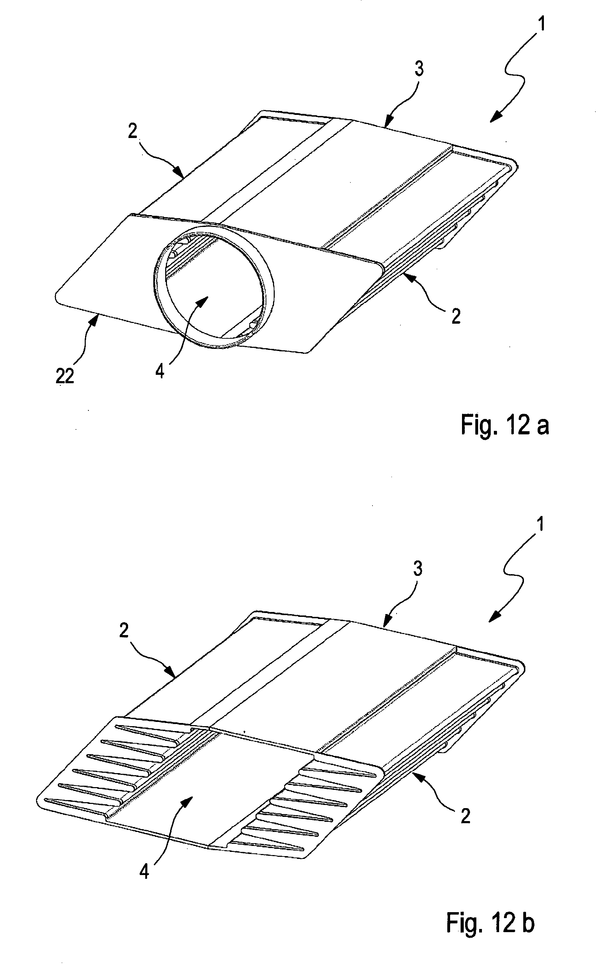

Die Figuren 11 a und 11 b zeigen eine Ausführungsform, bei welcher das Filterelement 1 einen im Wesentlichen trapezförmigen Querschnitt besitzt. Die Figuren 12a und 12b zeigen eine Ausführungsform, bei welcher das Filterelement 1 einen im Wesentlichen parallelogrammförmigen Querschnitt besitzt.

Bei der in Fig. 14 gezeigten Ausführungsform sind die vier Filterkörper 2 entsprechend den vier Seiten eines Quadrats angeordnet. Bei der in Fig. 15 gezeigten Ausführungsform sind die drei Filterkörper 2 in der Umfangsrichtung symmetrisch verteilt angeordnet.

Fig. 16 zeigt nun eine Ausführungsform, bei welcher das Filterelement 1 nur einen einzigen Filterkörper 2 aufweist. Die Tragstruktur 3 besitzt dann einen Abschnitt 27, der sich in der Umfangsrichtung 6 über wenigstens 180° um den Innenraum 4 herum erstreckt und somit einen wesentlichen Abschnitt eines Gehäuses zur radialen Begrenzung des Innenraums 4 bildet.

## Patentansprüche

1. Filterelement, insbesondere für eine Gasfiltereinrichtung, vorzugsweise einer Frischluftanlage eines Fahrzeugs,
- mit wenigstens einem Filterkörper (2) aus Filtermaterial (5),
- mit einer Tragstruktur (3) zum Positionieren des jeweiligen Filterkörpers (2),
- mit einem Innenraum (4), der in der Umfangsrichtung (6) von der Tragstruktur (3) und dem wenigstens einen Filterkörper (2) umschlossen ist und der axial von der Tragstruktur (3) begrenzt ist,
- wobei die Tragstruktur (3) an den wenigstens einen Filterkörper (2) angespritzt ist und einen einteiligen Monolithen aus Kunststoff bildet,
**dadurch gekennzeichnet,**
- **dass** die Tragstruktur (3) zwei axiale Enden aufweist, von denen zumindest das eine Ende als offenes Ende (17) ausgestaltet ist,
- **dass** das offene Ende (17) eine Verbindungsöffnung (18) in der Umfangsrichtung (6) umschließt, die axial mit dem Innenraum (4) fluidisch verbunden ist,
- **dass** der jeweilige Filterkörper (2) ein gefaltetes Filtermaterial (5) aufweist und in der Umfangsrichtung (6) nebeneinander mehrere im Querschnitt V-förmige Taschen (11,14) aufweist, wobei sich nach außen offene Taschen (14) und nach innen offene Taschen (11) in der Umfangsrichtung (6) abwechseln,
- **dass** das offene Ende (17) für den jeweiligen Filterkörper (2) eine Reihe (19) nebeneinander angeordneter, in die Verbindungsöffnung (18) vorstehende Zähne (20) aufweist, die jeweils eine nach außen offene Tasche (14) an einem dem offenen Ende (17) der Tragstruktur (3) zugewandten Längsende verschließen.

2. Filterelement nach Anspruch 1,
**dadurch gekennzeichnet,**
**dass** der jeweilige Filterkörper (2) plattenförmig ausgestaltet ist.

3. Filterelement nach Anspruch 1 oder 2,
**dadurch gekennzeichnet,**
**dass** der jeweilige Filterkörper (2) einen viereckigen Querschnitt besitzt.

4. Filterelement nach einem der Ansprüche 1 bis 3,
**dadurch gekennzeichnet,**
**dass** eine sich in der Umfangsrichtung (6) erstreckende radiale Begrenzung des Innenraums (4) durch zumindest einen Abschnitt der Tragstruktur (3) und durch den jeweiligen Filterkörper (2) gebildet ist.

5. Filterelement nach einem der Ansprüche 1 bis 4,
**dadurch gekennzeichnet,**
- **dass** die Tragstruktur (3) zwei axiale Enden aufweist, von denen zumindest das eine Ende als offenes Ende (17) ausgestaltet ist,
- **dass** das offene Ende (17) eine Verbindungsöffnung (18) in der Umfangsrichtung (6) umschließt, die axial mit dem Innenraum (4) fluidisch verbunden ist,
- **dass** am offenen Ende (17) außen eine separat zur Tragstruktur (3) hergestellte Endplatte (22) angebracht ist, die eine axial zur Verbindungsöffnung (18) fluchtende Durchgangsöffnung (23) aufweist.

6. Filterelement nach Anspruch 5,
**dadurch gekennzeichnet,**
- **dass** die Zähne (20) in den offenen Querschnitt der Durchgangsöffnung (23) hineinragen, oder
- **dass** die Zähne (20) mit ihren innenliegenden Enden außerhalb des offenen Querschnitts der Durchgangsöffnung (23) verbleiben.

7. Filterelement nach einem der Ansprüche 1 bis 4,
**dadurch gekennzeichnet,**
- **dass** die Tragstruktur (3) zwei axiale Enden aufweist, von denen zumindest das eine Ende als offenes Ende (17) ausgestaltet ist,
- **dass** das offene Ende (17) eine Verbindungsöffnung (18) in der Umfangsrichtung (6) umschließt, die axial mit dem Innenraum (4) fluidisch verbunden ist,
- **dass** am offenen Ende (17) außen eine in Umfangsrichtung (6) geschlossen umlaufende Dichtung (25) angespritzt ist, welche die Verbindungsöffnung (18) umschließt.

8. Filterelement nach Anspruch 7,
**dadurch gekennzeichnet,**
- **dass** die Dichtung (25) als Axialdichtung ausgestaltet ist, oder
- **dass** die Dichtung (25) als Radialdichtung ausgestaltet ist, oder
- **dass** die Dichtung (25) als axial und radial wirkende Dichtung ausgestaltet ist.

9. Filterelement nach einem der Ansprüche 1 bis 8,
**dadurch gekennzeichnet,**
**dass** wenigstens zwei Filterkörper (2) vorgesehen sind, die in der Umfangsrichtung (6) benachbart und berührungslos angeordnet sind.

10. Filterelement nach Anspruch 9,
**dadurch gekennzeichnet,**
**dass** zumindest zwei geometrisch verschiedene Filterkörper (2) vorgesehen sind.

11. Filterelement nach einem der Ansprüche 1 bis 10,
**dadurch gekennzeichnet,**
- **dass** genau zwei Filterkörper (2) vorgesehen sind,
- **dass** das Filterelement (1) einen rechteckigen Querschnitt aufweist,
- **dass** die beiden Filterkörper (2) einander gegenüberliegen und zwei lange Seiten des Rechteckquerschnitts oder zwei kurze Seiten des Rechteckquerschnitts bilden.

12. Filterelement nach einem der Ansprüche 1 bis 8,
**dadurch gekennzeichnet,**
- **dass** nur ein einziger Filterkörper (2) vorgesehen ist,
- **dass** sich die Tragstruktur (3) in der Umfangsrichtung (6) über wenigstens 180° um den Innenraum (4) herum erstreckt.

13. Verfahren zum Herstellen eines Filterelements (1) nach einem der vorhergehenden Ansprüche, mit den Schritten:
- Positionieren wenigstens eines Filterkörpers (2) aus Filtermaterial (5) in einer Spritzgussform (9),
- Anspritzen einer monolithischen Tragstruktur (3) an den wenigstens einen Filterkörper (2), sodass ein Filterelement (1) mit einem Innenraum (4) entsteht, der in der Umfangsrichtung (6) von der Tragstruktur (3) und dem wenigstens einen Filterkörper (2) umschlossen ist.

## Claims

1. Filter element, in particular for a gas filter apparatus, preferably in a fresh air system in a vehicle,
- comprising at least one filter body (2) made of filter material (5),
- comprising a support structure (3) for positioning each of the filter bodies (2),
- comprising an inner space (4) which is surrounded in the circumferential direction (6) by the support structure (3) and the at least one filter body (2) and is axially delimited by the support structure (3),
- the support structure (3) being integrally moulded to the at least one filter body (2) and forming an integral monolith made of plastics material,
**characterised in that**
- the support structure (3) has two axial ends, at least one of which is formed as an open end (17),
- the open end (17) surrounds a connection opening (18), which is axially fluidically connected to the inner space (4), in the circumferential direction (6),
- each of the filter bodies (2) comprises a folded filter material (5) and has a plurality of recesses (11, 14) which have a V-shaped cross section and are arranged next to one another in the circumferential direction (6) such that outwardly open recesses (14) alternate with inwardly open recesses (11) in the circumferential direction (6),
- the open end (17) for each of the filter bodies (2) comprises a row (19) of teeth (20) which are arranged next to one another, protrude into the connection opening (18) and close a recess (14), which is open outwards, at a longitudinal end facing the open end (17) of the support structure (3).

2. Filter element according to claim 1, **characterised in that** each of the filter bodies (2) is plate-shaped.

3. Filter element according to either claim 1 or claim 2, **characterised in that** each of the filter bodies (2) has a quadrangular cross section.

4. Filter element according to any of claims 1 to 3, **characterised in that** the inner space (4) is radially delimited in the circumferential direction (6) by at least one portion of the support structure (3) and by each of the filter bodies (2).

5. Filter element according to any of claims 1 to 4, **characterised in that**
- the support structure (3) has two axial ends, at least one of which is formed as an open end (17),
- the open end (17) surrounds a connection opening (18), which is axially fluidically connected to the inner space (4), in the circumferential direction (6),
- an end plate (22) produced separately from the support structure (3) is attached to the outside of the open end (17) and comprises a through-opening (23) which is axially aligned with the connection opening (18).

6. Filter element according to claim 5, **characterised in that**
- the teeth (20) protrude into the open cross section of the through-opening (23), or
- the inner ends of the teeth (20) remain outside the open cross section of the through-opening (23).

7. Filter element according to any of claims 1 to 4, **characterised in that**
- the support structure (3) has two axial ends, at least one of which is formed as an open end (17),
- the open end (17) surrounds a connection opening (18), which is axially fluidically connected to the inner space (4), in the circumferential direction (6),
- a peripheral seal (25) which surrounds the connection opening (18) is integrally moulded to the outside of the open end (17) such that it is closed in the circumferential direction (6).

8. Filter element according to claim 7, **characterised in that**
- the seal (25) is formed as an axial seal, or
- the seal (25) is formed as a radial seal, or
- the seal (25) is formed so as to function as both an axial and radial seal.

9. Filter element according to any of claims 1 to 8, **characterised in that** at least two filter bodies (2) are provided adjacent to one another in the circumferential direction (6) and are arranged so as not to touch.

10. Filter element according to claim 9, **characterised in that** at least two filter bodies (2) having different geometries are provided.

11. Filter element according to any of claims 1 to 10, **characterised in that**
- exactly two filter bodies (2) are provided,
- the filter element (1) has a rectangular cross section,
- the two filter bodies (2) are opposite one another and form two long sides of the rectangular cross section or two short sides of the rectangular cross section.

12. Filter element according to any of claims 1 to 8, **characterised in that**
- only one filter body (2) is provided,
- the support structure (3) extends around the inner space (4) in the circumferential direction (6) over at least 180°.

13. Method for producing a filter element (1) according to any of the preceding claims, comprising the steps of:
- positioning at least one filter body (2) made of filter material (5) in an injection mould (9),
- integrally moulding a monolithic support structure (3) to the at least one filter body (2) such that a filter element (1) having an inner space (4) is formed and is surrounded in the circumferential direction (6) by the support structure (3) and by the at least one filter body (2).

## Revendications

1. Elément de filtration, en particulier pour un dispositif de filtration de gaz, de préférence pour une installation d'alimentation en air frais d'un véhicule, comprenant
- au moins un corps de filtration (2) composé d'un matériau de filtration (5),
- au moins une structure porteuse (3) servant à positionner le corps de filtration (2) respectif,
- un espace intérieur (4), qui est entouré, dans le sens de la périphérie (6), par la structure porteuse (3) et par le corps de filtration (2) au moins au nombre de un et qui est délimité de manière axiale par la structure porteuse (3),
- où la structure porteuse (3) est moulée par injection au niveau du corps de filtration (2) au moins au nombre de un et forme un monobloc d'un seul tenant en plastique,
**caractérisé en ce**
- **que** la structure porteuse (3) présente deux extrémités axiales, dont au moins l'une extrémité est configurée sous la forme d'une extrémité ouverte (17),
- **que** l'extrémité ouverte (17) entoure une ouverture de liaison (18) dans le sens de la périphérie (6), qui est en liaison fluidique de manière axiale avec l'espace intérieur (4),
- **que** le corps de filtration (2) respectif présente un matériau de filtration (5) plié et présente, les unes à côté des autres dans le sens de la périphérie (6), plusieurs poches (11, 14) présentant une forme en V dans la section transversale, où des poches ouvertes vers l'extérieur (14) et des poches ouvertes vers l'intérieur (11) alternent dans le sens de la périphérie (6),
- **que** l'extrémité ouverte (17) pour le corps de filtration (2) respectif présente une rangée (19) de dents (20) disposées les unes à côté des autres, faisant saillie dans l'ouverture de liaison (18), qui ferment respectivement une poche ouverte vers l'extérieur (14) au niveau d'une extrémité longitudinale tournée vers l'extrémité ouverte (17) de la structure porteuse (3).

2. Elément de filtration selon la revendication 1,
**caractérisé en ce**
**que** le corps de filtration (2) respectif est configuré de manière à présenter une forme de plaque.

3. Elément de filtration selon la revendication 1 ou 2,
**caractérisé en ce**
**que** le corps de filtration (2) respectif comporte une section transversale rectangulaire.

4. Elément de filtration selon l'une quelconque des revendications 1 à 3,
**caractérisé en ce**
**qu'**une délimitation, radiale s'étendant dans le sens de la périphérie (6), de l'espace intérieur (4) est formée par au moins une section de la structure porteuse (3) et par le corps de filtration (2) respectif.

5. Elément de filtration selon l'une quelconque des revendications 1 à 4,
**caractérisé en ce**
- **que** la structure porteuse (3) présente deux extrémités axiales, dont au moins l'une extrémité est configurée sous la forme d'une extrémité ouverte (17),
- **que** l'extrémité ouverte (17) entoure une ouverture de liaison (18) dans le sens de la périphérie (6), qui est en liaison fluidique de manière axiale avec l'espace intérieur (4),
- **qu'**est installée, au niveau de l'extrémité ouverte (17), à l'extérieur, une plaque d'extrémité (22) fabriquée séparément par rapport à la structure porteuse (3), qui présente une ouverture de passage (23) alignée de manière axiale par rapport à l'ouverture de liaison (18).

6. Elément de filtration selon la revendication 5,
**caractérisé en ce**
- **que** les dents (20) dépassent à l'intérieur de la section transversale ouverte de l'ouverture de passage (23), ou
- **que** les dents (20) restent, par leurs extrémités situées côté intérieur, en dehors de la section transversale ouverte de l'ouverture de passage (23).

7. Elément de filtration selon l'une quelconque des revendications 1 à 4,
**caractérisé en ce**
- **que** la structure porteuse (3) présente deux extrémités axiales, dont au moins l'une extrémité est configurée sous la forme d'une extrémité ouverte (17),
- **que** l'extrémité ouverte (17) entoure une ouverture de liaison (18) dans le sens de la périphérie (6), qui est en liaison fluidique de manière axiale avec l'espace intérieur (4),
- **qu'**est moulé par injection, au niveau de l'extrémité ouverte (17), à l'extérieur, un joint d'étanchéité (25) périphérique fermé dans le sens de la périphérie (6), lequel entoure l'ouverture de liaison (18).

8. Elément de filtration selon la revendication 7,
**caractérisé en ce**
- **que** le joint d'étanchéité (25) est configuré sous la forme d'un joint d'étanchéité axial, ou
- **que** le joint d'étanchéité (25) est configuré sous la forme d'un joint d'étanchéité radial, ou
- **que** le joint d'étanchéité (25) est configuré sous la forme d'un joint d'étanchéité ayant une action axiale et radiale.

9. Elément de filtration selon l'une quelconque des revendications 1 à 8,
**caractérisé en ce**
**que** sont prévus au moins deux corps de filtration (2), qui sont disposés de manière adjacente et sans contact dans le sens de la périphérie (6).

10. Elément de filtration selon la revendication 9,
**caractérisé en ce**
**que** sont prévus au moins deux corps de filtration (2) différents d'un point de vue géométrique.

11. Elément de filtration selon l'une quelconque des revendications 1 à 10,
**caractérisé en ce**
- **que** sont prévus précisément deux corps de filtration (2),
- **que** l'élément de filtration (1) présente une section transversale rectangulaire,
- **que** les deux corps de filtration (2) se font face et forment deux côtés longs de la section transversale rectangulaire ou deux côtés courts de la section transversale rectangulaire.

12. Elément de filtration selon l'une quelconque des revendications 1 à 8,
**caractérisé en ce**
- **qu'**est prévu uniquement un seul corps de filtration (2),
- **que** la structure porteuse (3) s'étend autour de l'espace intérieur (4) sur au moins 180° dans le sens de la périphérie (6).

13. Procédé servant à fabriquer un élément de filtration (1) selon l'une quelconque des revendications précédentes, comprenant les étapes qui suivent consistant à :
- positionner au moins un corps de filtration (2) composé d'un matériau de filtration (5) dans un moule de coulée par injection (9) ;
- mouler par injection une structure porteuse (3) monobloc au niveau du corps de filtration (2) au moins au nombre de un de sorte qu'un élément de filtration (1) avec un espace intérieur (4) se forme, lequel espace intérieur est entouré, dans le sens de la périphérie (6), par la structure porteuse (3) et par le corps de filtration (2) au moins au nombre de un.
